# EUROPÄISCHE PATENTSCHRIFT

(11) **EP 1 011 253 B1**
(45) Veröffentlichungstag und Bekanntmachung des Hinweises auf die Patenterteilung: **24.03.2004**
(21) Anmeldenummer: 98124029.4
(22) Anmeldetag: 17.12.1998
(51) Int. Cl.: H04M 3/46, H04M 3/42, H04Q 3/00, H04Q 3/47

(54) **Verfahren zur Realisierung von Anrufübernahmegruppen in einem Kommunikationnsetz**
Method for establishing a call to a usergroup in a telecommunications network
Méthode pour la mise en place d'un appel vers un groupe d'utilisateurs dans un réseau de télécommunication

(43) Veröffentlichungstag der Anmeldung: 21.06.2000
(73) Patentinhaber: SIEMENS AKTIENGESELLSCHAFT, 80333 München (DE)
(72) Erfinder: Catley, Ian, 80336 München (DE); Stampfl, Robert Dipl.-Ing., 85411 Hohenkammer (DE); Mayer, Georg Dipl.-Ing., 83714 Miesbach (DE)

(56) Entgegenhaltungen:
- EP-A- 0 549 126
- WO-A-94/29992
- WO-A-97/50234
- US-A- 5 454 032

## Beschreibung

Bei vielen zeitgemäßen Vermittlungseinrichtungen lassen sich daran angeschlossene Endgeräte zu einer sogenannten Anrufübernahmegruppe zusammenzufassen. Dies dient dem Zweck, daß Anrufe, die an ein beliebiges Endgerät einer solchen Anrufübernahmegruppe gerichtet sind, auch von jedem anderen Endgerät dieser Anrufübernahmegruppe entgegengenommen werden können. Dazu wird das Eintreffen eines an ein Endgerät der Anrufübernahmegruppe gerichteten Anrufs auch bei den anderen Endgeräten der Anrufübernahmegruppe angezeigt und der Anruf nach Betätigung einer Anrufübernahmetaste o.ä. an einem der Endgeräte der Anrufübernahmegruppe von der Vermittlungseinrichtung zu diesem Endgerät durchgeschaltet.

Ein derartiges Leistungsmerkmal wird beispielsweise von der im Handel erhältlichen Vermittlungseinrichtung HICOM 300 E, Version 2.0 der Firma Siemens AG bereitgestellt.

Eine Beschränkung bei den bisher bekannten Verfahren zur Realisierung solcher Anrufübernahmegruppen besteht darin, daß in eine Anrufübernahmegruppe nur solche Endgeräte einbezogen werden können, die an derselben Vermittlungseinrichtung angeschlossenen sind.

Auch sind Verfahren bekannt wobei zur Realisierung eines netzknotenübergreifend entgegenzunehmenden Anrufs eine spezielle Ziel-Verzeichnisnummer angewendet wird.

Ein derartiges Verfahren wird beispielsweise in der Europäische Patentanmeldung EP-A-0 549 126 genannt.

Eine Beschränkung bei diesem Verfahren ist dass die Entscheidung, dass der Anruf an mehreren Endgeräten entgegennehmbar sein soll, durch den Anrufer zu treffen ist.

Es ist Aufgabe der vorliegenden Erfindung, ein flexibleres Verfahren zur Realisierung von Anrufübernahmegruppen anzugeben mit dem die vorstehend erläuterte Beschränkung überwunden werden kann.

Gelöst wird diese Aufgabe durch ein Verfahren mit den Merkmalen des Patentanspruchs 1.

Durch das erfindungsgemäße Verfahren kann einem Endgerät eine Anrufübernahmegruppe zugeordnet werden, die außer am selben Netzknoten angekoppelten Endgeräten auch an beliebigen weiteren Netzknoten des Kommunikationsnetzes angekoppelte Endgeräte umfaßt. Dabei ist der Anwendungsbereich das Verfahren nicht auf eine bestimmte Art von Netzknoten, wie z.B. Vermittlungsstationen, beschränkt, sondern erstreckt sich vielmehr auf beliebige Netzknoten eines Kommunikationsnetzes mit angekoppelten Endgeräten, wie z.B. auch Mobilfunk-Basisstationen.

Die Zuordnung einer Anrufübernahmegruppe zu einem Endgerät kann durch Zugehörigkeit dieses Endgeräts zu einer festlegbaren Gruppe von Endgeräten bestimmt sein. In diesem Fall ist jedem Endgerät dieser Gruppe dieselbe Anrufübernahmegruppe, nämlich die Gruppe selbst zugeordnet. Dies hat den Vorteil, daß eine Anrufübernahmegruppe auf sehr einfache Weise durch Einspeichern der betreffenden Endgerätekennungen in eine in den beteiligten Netzknoten enthaltene Tabelle gebildet oder verändert werden kann.

Eine Alternative besteht darin, daß jedem Endgerät einer einem ersten Endgerät zugeordneten Anrufübernahmegruppe eine eigene Anrufübernahmegruppe zugeordnet sein kann. Diese muß nicht mit der dem ersten Endgerät zugeordneten Anrufübernahmegruppe übereinstimmen, so daß bei dieser Alternative eine komplexere Konfigurierung möglich ist. Insbesondere kann ein Endgerät dann in mehreren unterschiedlichen Anrufübernahmegruppen enthalten sein.

Vorteilhafte Ausführungsformen und Weiterbildungen der Erfindung sind in den Unteransprüchen angegeben.

Gemäß einer vorteilhaften Ausführungsform der Erfindung kann die Signalisierungsinformation und/oder die Information über die Entgegennahme des Anrufs über eine zu diesem Zweck zwischen den Netzknoten aufgebaute Verbindung, vorzugsweise eine Signalisierungsverbindung, wie z.B. CISC (Call Independent Signalling Connection), übermittelt werden. Ein Verbindungsaufbau kann dabei durch einen eintreffenden Anruf ausgelöst werden.

Alternativ dazu können die zu übertragenden Informationen auch über eine bereits bestehende Verbindung übermittelt werden, wodurch ein zeitintensiver Neuaufbau einer Verbindung vermieden wird. In diesem Zusammenhang ist es vorteilhaft, wenn eine zur Übermittlung der Signalisierungsinformation und/oder der Information über die Entgegennahme eines Anrufs benutzte Verbindung zwischen den Netzknoten erst nach Ablauf einer vorgebbaren Zeitspanne ab Entgegennahme eines Anrufs wieder abgebaut wird. Damit kann dieselbe Verbindung für die Signalisierung von während dieser Zeitspanne eintreffenden, weiteren Anrufen genutzt werden.

Bei einer kanalorientierten Verbindung kann die Signalisierungsinformation und/oder die Information über die Entgegennahme eines Anrufes vorteilhafterweise innerhalb eines Signalisierungskanals, wie z.B. dem D-Kanal einer ISDN-Verbindung, übertragen werden.

Gemäß einer weiteren vorteilhaften Weiterbildung des erfindungsgemäßen Verfahrens wird mit der Signalisierungsinformation auch anrufspezifische Information an den weiteren Netzknoten übermittelt. Auf diese Weise kann z.B. die Rufnummer und/oder der Name des anrufenden und/oder des gerufenen Teilnehmers an den weiteren Netzknoten übermittelt werden, um bei den an diesen Netzknoten angekoppelten Endgeräten der Anrufübernahmegruppe angezeigt zu werden.

Ein Ausführungsbeispiel der Erfindung wird nachfolgend anhand der Zeichnung näher erläutert.

Dabei zeigen
- Fig 1: ein Kommunikationsnetz mit mehreren Netzknoten und daran angeschlossenen Endgeräten, in schematischer Darstellung,
- Fig 2: in den Netzknoten enthaltene Zuordnungstabellen zur Zuordnung von Endgeräten und Netzknoten zu Anrufübernahmegruppen und
- Fig 3: ein Ablaufdiagramm des zwischen Netzknoten ablaufenden Signalisierungsverkehrs.

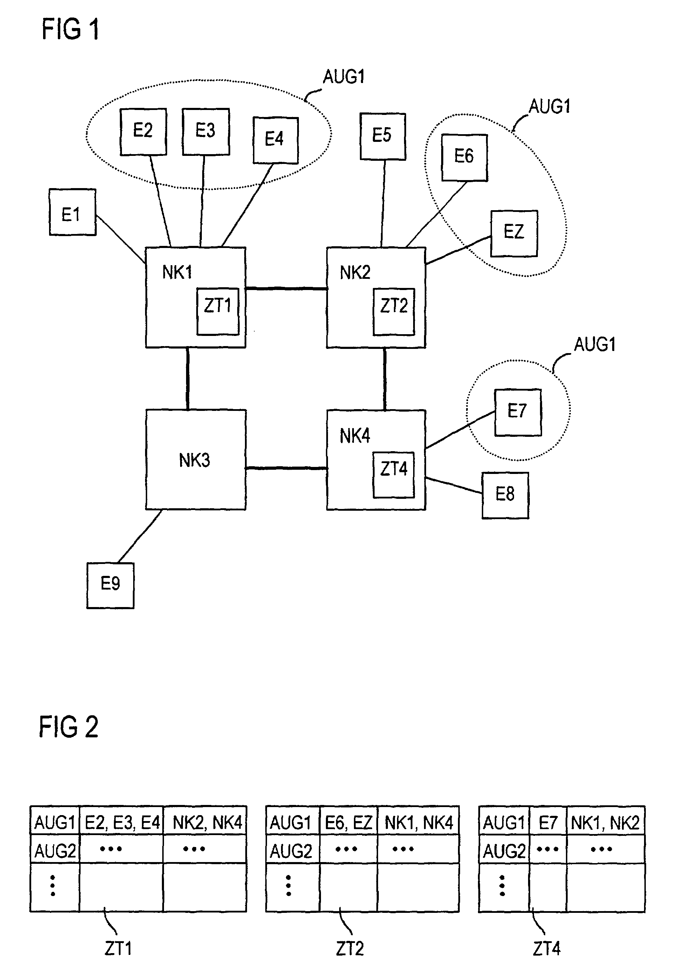

In Fig 1 ist ein Kommunikationsnetz mit vier miteinander vernetzten Netzknoten NK1,...,NK4 und daran angeschlossenen Endgeräten EZ, E1,...,E9 schematisch dargestellt. Die Endgeräte E1,...,E4 sind dabei an den Netzknoten NK1, die Endgeräte EZ, E5, E6 an den Netzknoten NK2, das Endgerät E9 an den Netzknoten NK3 und die Endgeräte E7, E8 an den Netzknoten NK4 angeschlossen. Die Endgeräte E2, E3, E4, E6 und E7 sind in einer dem Endgerät EZ zugeordneten, netzknotenübergreifenden Anrufübernahmegruppe AUG1 enthalten, wobei das Endgerät EZ als ebenfalls zu dieser Anrufübernahmegruppe AUG1 gehörig betrachtet wird. An das Endgerät EZ gerichtete Anrufe sind damit an allen zu dessen Anrufübernahmegruppe AUG1 gehörigen Endgeräten mit der Möglichkeit anzuzeigen, diese Anrufe an jedem dieser Endgeräte entgegenzunehmen. Zur Zuordnung von Endgeräten und Netzknoten zu Anrufübernahmegruppen enthalten die Netzknoten NK1, NK2 und NK4 ferner je eine Zuordnungstabelle ZT1, ZT2 bzw. ZT4, beispielsweise in Form eines dafür vorgesehenen Speicherbereichs.

Fig 2 veranschaulicht den Dateninhalt dieser Zuordnungstabellen ZT1, ZT2 und ZT4. Für jeden Netzknoten NK1, NK2 bzw. NK4 sind in der jeweils darin enthaltenen Zuordnungstabelle ZT1, ZT2 bzw. ZT4 alle den jeweiligen Netzknoten NK1, NK2 bzw. NK4 betreffenden Anrufübernahmegruppen AUN1, AUN2,... eingetragen. Einem Eintrag einer Anrufübernahmegruppe ist dabei ein Eintrag für jedes zu dieser Anrufübernahmegruppe gehörige, an den betreffenden Netzknoten angeschlossene Endgerät sowie ein Eintrag für jeden weiteren Netzknoten, an den weitere Endgeräte dieser Anrufübernahmegruppe angeschlossen sind, zugeordnet. Die Tabelleneinträge setzen sich aus einer die jeweilige Anrufübernahmegruppe identifizierenden Information sowie den Kennungen der zugeordneten Endgeräte bzw. Netzknoten zusammen. Die direkt an einen Netzknoten angeschlossenen Endgeräte einer Anrufübernahmegruppe sind somit direkt durch den ihr zugeordneten Tabelleneintrag bezeichnet, während die weiteren Endgeräte dieser Anrufübernahmegruppe indirekt über Verweise auf die entsprechenden weiteren Netzknoten bzw. deren Zuordnungstabellen, in denen diese weiteren Endgeräte dann eingetragen sind, bestimmt sind.

Da die Struktur einer Anrufübernahmegruppe durch die Einträge in die Zuordnungstabellen bestimmt ist, kann eine Anrufübernahmegruppe auf einfache Weise durch Einträge in diese Tabelle gebildet oder verändert werden.

Bei Eintreffen eines Anrufs für das am Netzknoten NK2 angeschlossene Endgerät EZ wird von diesem Netzknoten NK2 zunächst die Zuordnungstabelle ZT2 nach der Kennung dieses Endgerätes EZ durchsucht. Falls diese Suche nicht erfolgreich verliefe, würde der eintreffende Anruf ausschließlich dem Endgerät EZ signalisiert und könnte auch nur dort entgegengenommen werden. Im vorliegenden Beispiel wird die Kennung des Endgeräts EZ jedoch in der Zuordnungstabelle ZT2 - zugeordnet zur Anrufübernahmegruppe AUG1 - aufgefunden, woraufhin eine Signalisierung des Anrufs an alle Endgeräte der Anrufübernahmegruppe AUG1 initiiert wird. Zu diesem Zweck werden aus der Zuordnungstabelle ZT2 zunächst die Kennungen von direkt an den Netzknoten NK2 angeschlossenen Endgeräten E6 und EZ der Anrufübernahmegruppe AUN1 ausgelesen und eine Signalisierung des Anrufs zu diesen beiden Endgeräten E6, EZ veranlaßt. Weiterhin werden die Kennungen der dieser Anrufübernahmegruppe AUN1 zugeordneten Netzknoten NK1 und NK4 aus der Zuordnungstabelle ZT2 ausgelesen und jeweils eine Signalisierungsverbindung zwischen den Netzknoten NK1, NK4 und dem Netzknoten NK2 aufgebaut. Vorzugsweise wird hierbei eine sogenannte CISC-Signalisierungsverbindung (Call Independent Signalling Connection) aufgebaut, die von vielen Kommunikationssystemen als Möglichkeit zum anrufunabhängigen Austausch von Signalisierungsinformation bereitgestellt wird. Die Signalisierung erfolgt dabei über den sogenannten D-Kanal, z.B. gemäß der ETSI-Standard-Definition für Signalisierung QSIG für private Netze bzw. DSS1 für öffentliche Netze oder anderen ITU-T-Standard-Definitionen.

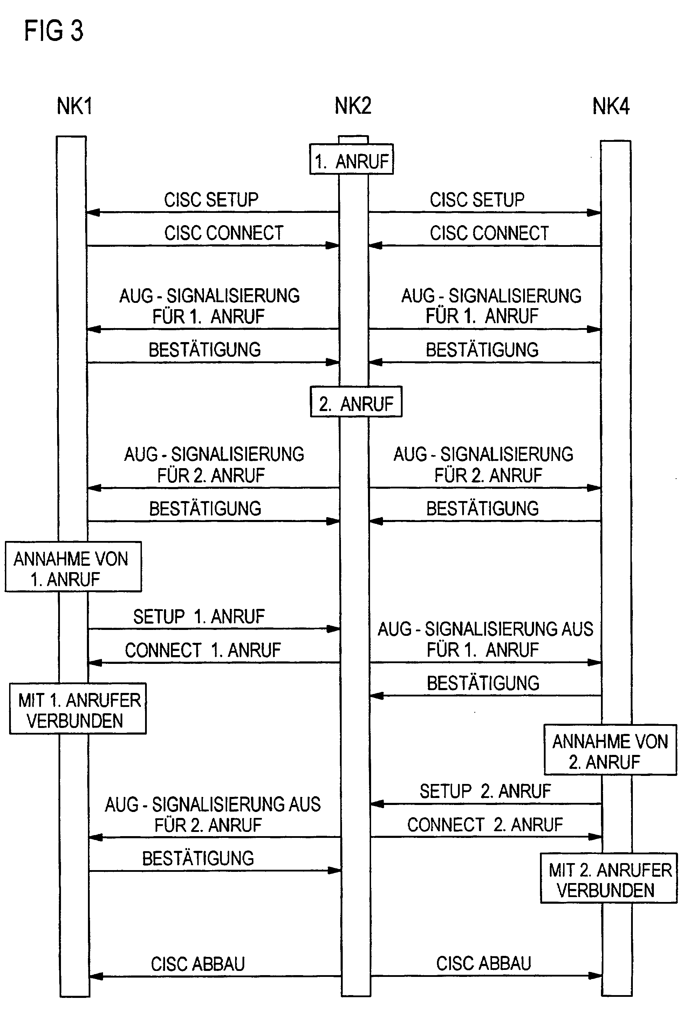

Fig 3 zeigt ein Ablaufdiagramm des Signalisierungsverkehrs über die Signalisierungsverbindungen zwischen dem Netzknoten NK2 und den Netzknoten NK1 und NK4. Die Signalisierungsverbindungen werden nach dem Eintreffen des Anrufs - im folgenden als erster Anruf bezeichnet - aufgebaut, indem vom Netzknoten NK2 an die Netzknoten NK1 und NK4 jeweils eine Verbindungsaufbaumeldung (CISC Setup) gesendet wird, die durch ein Bestätigungssignal (CISC CONNECT) von den Netzknoten NK1 und NK4 rückbestätigt wird.

Anschließend wird über die aufgebauten Signalisierungsverbindungen den Netzknoten NK1 und NK4 vom Netzknoten NK2 das Eintreffen des ersten Anrufs durch Übermitteln einer die Anrufübernahmegruppe AUG1 identifizierenden Signalisierungsinformation (AUG-Signalisierung) signalisiert. Die Übertragung der Signalisierungsinformation erfolgt dabei vorzugsweise innerhalb sogenannter Facility-Informationselemente. Mit der Signalisierungsinformation werden zusätzlich anrufspezifische Informationen wie der Name und/oder die Rufnummer des rufenden und/oder des gerufenen Teilnehmers übermittelt. Der Empfang der Signalisierungsinformation für den ersten Anruf wird von den Netzknoten NK1 und NK4 wiederum rückbestätigt.

Nach Empfang der die Anrufübernahmegruppe AUG1 identifizierenden Signalisierungsinformation werden von den Netzknoten NK1 und NK4 jeweils die der identifizierten Anrufübernahmegruppe AUG1 zugeordneten Kennungen der Endgeräte E2, E3 und E4 bzw. E7 aus der Zuordnungstabelle ZT1 bzw. ZT4 ausgelesen. Anschließend wird den auf diese Weise bestimmten Endgeräten E2, E3, E4 und E7 das Eintreffen des ersten Anrufs vom jeweils zuständigen Netzknoten NT1 bzw. NT4 signalisiert.

Diese Signalisierung und die oben beschriebene Signalisierung an die Endgeräte E6 und EZ erfolgt in einer Weise (z.B. gemäß QSIG-Protokoll), daß an den Endgeräten E2, E3, E4, E6, E7 und EZ das Eintreffen des ersten Anrufs jeweils angezeigt wird und die Möglichkeit geschaffen wird, diesen Anruf an jedem dieser Endgeräte entgegenzunehmen. Das Eintreffen des ersten Anrufs wird dabei an den Endgeräten E2, E3, E4, E6, E7, EZ durch ein akustisches und/oder optisches Signal, wie z.B. durch ein Klingelzeichen und/oder ein Aufleuchten einer Leuchtdiode einer Anrufübernahmetaste, angezeigt. Weiterhin wird diesen Endgeräten oder einer Auswahl davon auch anrufspezifische Information wie der Name und/oder die Rufnummer des rufenden und/oder des gerufenen Teilnehmers übermittelt und - sofern dort eine entsprechende Anzeigemöglichkeit besteht - angezeigt.

Im vorliegenden Ausführungsbeispiel trifft nach der Signalisierung des ersten Anrufs ein zweiter Anruf für das Endgerät EZ ein. Der zweite Anruf löst im wesentlichen die gleichen, oben beschriebenen Verfahrensschritte wie der erste Anruf aus, mit der Ausnahme, daß kein zeitaufwendiger Neuaufbau einer Signalisierungsverbindung stattfindet. Die Übermittlung und Rückbestätigung der die Anrufübernahmegruppe AUG1 identifizierenden Signalisierungsinformation (AUG-Signalisierung) für den zweiten Anruf erfolgt vielmehr über die bereits bestehenden Signalisierungsverbindungen zwischen dem Netzknoten NK2 und den Netzknoten NK1, NK4.

Nach erfolgter Signalisierung des zweiten Anrufs an die Endgeräte E2, E3, E4, E6, E7 und EZ der Anrufübernahmegruppe AUN1 wird im vorliegenden Ausführungsbeispiel der erste Anruf an dem am Netzknoten NK1 angeschlossenen Endgerät E2 entgegengenommen. Vom Netzknoten NK1 wird infolgedessen eine Anforderung (Setup) zur Übergabe des am Netzknoten NK2 gehaltenen, ersten Anrufs über die bestehende Signalisierungsverbindung an den Netzknoten NK2 übermittelt, woraufhin der erste Anruf über den Netzknoten NK1 zum Endgerät E2 durchgeschaltet wird. Vorzugsweise kann dabei das über das QSIG-Protokoll zugängliche Leitungsmerkmal "Path Replacement" genutzt werden, um eine Direktverbindung zwischen erstem Anrufer und dem Endgerät E2, ohne Umweg über den Netzknoten NK2 zu erstellen.

Mit dem Durchschalten des ersten Anrufs wird die diesen Anruf betreffende Anzeige an den Endgeräten E3, E4 durch den Netzknoten NK1 und an den Endgeräten E6, EZ durch den Netzknoten NK2 abgeschaltet. Dem Netzknoten NK4 wird zum gleichen Zweck eine die Anrufübernahmegruppe AUN1 identifizierende Abschalteinformation (AUG-Signalisierung aus) für den ersten Anruf übermittelt, die diesen Netzknoten NK4 zur Abschaltung der entsprechenden Anzeige am Endgerät E7 veranlaßt. Dies wird vom Netzknoten NK4 wiederum rückbestätigt.

Schließlich wird im vorliegenden Ausführungsbeispiel der zweite Anruf am Endgerät E7 entgegengenommen, was wiederum dazu führt, daß der zweite Anruf zu diesem Endgerät E7 durchgeschaltet wird und die den zweiten Anruf betreffende Anzeige an allen übrigen Endgeräten E2, E3, E4, E6 und EZ der Anrufübernahmegruppe AUG1 abgeschaltet wird. Die Austausch von Signalisierungsinformation zwischen den Netzknoten erfolgt dabei ebenfalls über die bereits bestehenden Signalisierungsverbindungen.

Nach der Entgegennahme des letzten (hier des zweiten) gehaltenen Anrufs wird ein Zeitgeber gestartet, um die Signalisierungsverbindungen erst nach Ablauf einer vorgebbaren Zeitspanne abzubauen. Durch den verzögerten Abbau der Signalisierungsverbindungen können diese für die Signalisierung von eventuell während dieser Zeitspanne eintreffenden, weiteren Anrufen genutzt werden. In solchen Fällen ist kein zeitaufwendiger Neuaufbau dieser Signalisierungsverbindungen erforderlich.

## Patentansprüche

1. Verfahren zur Realisierung von Anrufübernahmegruppen in einem Kommunikationsnetz mit mehreren Netzknoten, wobei
a) nach Eintreffen eines Anrufs, der an ein an einem ersten Netzknoten (NK2) angekoppeltes, gerufenes Endgerät (EZ) gerichtet ist, ein weiterer Netzknoten (NK4) ermittelt wird, an dem mindestens ein dem gerufenen Endgerät (EZ) im Sinne einer Anrufübernahmegruppe (AUG1) zugeordnetes Endgerät (E7) angekoppelt ist,
wobei der weitere Netzknoten (NK4) durch Durchsuchen einer im ersten Netzknoten (NK2) enthaltenen Zuordnungstabelle (ZT2), in der der Kennung des gerufenen Endgerätes (EZ) die Anrufübernahmegruppe (AUG1) und dieser der weitere Netzknoten (NK4) zugeordnet ist, nach der Kennung des gerufenen Endgerätes ermittelt wird, und
b) vom ersten Netzknoten (NK2) an den weiteren Netzknoten (NK4) eine Signalisierungsinformation zur Identifikation von an dem weiteren Netzknoten (NK4) angekoppelten Endgeräten (E7) der Anrufübernahmegruppe (AUG1) übermittelt wird, und
c) daraufhin vom weiteren Netzknoten (NK4) veranlaßt wird, daß an den bei ihm angekoppelten Endgeräten (E7) der Anrufübernahmegruppe (AUG1) eine die Möglichkeit zur Entgegennahme des Anrufs bezeichnende Hinweisinformation angezeigt wird, und
d) eine Entgegennahme des Anrufs an einem an dem weiteren Netzknoten (NK4) angekoppelten Endgerät (E7) der Anrufübernahmegruppe (AUG1), von dem weiteren an den ersten Netzknoten signalisiert wird, und
e) der am ersten Netzknoten (NK2) gehaltene Anruf daraufhin zu diesem Endgerät (E7) durchgeschaltet wird.

2. Verfahren nach Anspruch 1,
**dadurch gekennzeichnet,**
**daß** die Übermittlung der Signalisierungsinformation über eine zwischen dem ersten Netzknoten (NK2) und dem weiteren Netzknoten (NK4) zu diesem Zweck aufgebaute Verbindung erfolgt.

3. Verfahren nach Anspruch 2,
**dadurch gekennzeichnet,**
**daß** der Aufbau der Verbindung durch den eintreffenden Anruf ausgelöst wird.

4. Verfahren nach Anspruch 2 oder 3,
**dadurch gekennzeichnet,**
**daß** die Entgegennahme des Anrufs über die aufgebaute Verbindung an den ersten Netzknoten (NK2) signalisiert wird.

5. Verfahren nach einem der Ansprüche 2 bis 4,
**dadurch gekennzeichnet,**
**daß** die aufgebaute Verbindung nach Ablauf einer vorgebbaren Zeitspanne ab Entgegennahme des Anrufs abgebaut wird.

6. Verfahren nach einem der vorhergehenden Ansprüche,
**dadurch gekennzeichnet,**
**daß** bei Entgegennahme des Anrufs an einem Endgerät (E7) der Anrufübernahmegruppe (AUG1) eine netzknotenübergreifende Signalisierung zum Abschalten der Anzeige der Hinweisinformation an den Endgeräten (E2, E3, E4, E6, EZ, E7) der Anrufübernahmegruppe (AUG1) erfolgt.

7. Verfahren nach einem der vorhergehenden Ansprüche,
**dadurch gekennzeichnet,**
**daß** mit der Signalisierungsinformation auch anrufspezifische Information an den weiteren Netzknoten (NK4) zur Anzeige bei einem an diesem Netzknoten angekoppelten Endgerät (E7) der Anrufübernahmegruppe (AUG1) übermittelt wird.

8. Verfahren nach einem der vorhergehenden Ansprüche,
**dadurch gekennzeichnet,**
**daß** der weitere Netzknoten (NK4) durch Zugriff auf eine im ersten Netzknoten (NK2) gespeicherte Netzknoten-Zuordnungstabelle (ZT2) ermittelt wird, in der einem am ersten Netzknoten (NK2) angekoppelten Endgerät (EZ) weitere Netzknoten (NK1, NK4) zugeordnet sind, an denen mindestens ein zur Anrufübernahmegruppe (AUN1) dieses Endgerätes (EZ) gehöriges Endgerät angekoppelt ist.

9. Verfahren nach einem der vorhergehenden Ansprüche,
**dadurch gekennzeichnet,**
**daß** ein Endgerät der Anrufübernahmegruppe (AUN1), an dem die Hinweisinformation anzuzeigen ist, durch Zugriff auf eine Endgeräte-Zuordnungstabelle im ersten Netzknoten (NK2) ermittelt wird, in der einem am ersten Netzknoten (NK2) angekoppelten Endgerät ein zu dessen Anrufübernahmegruppe gehöriges, weiteres Endgerät zugeordnet ist, und
**daß** eine das ermittelte Endgerät der Anrufübernahmegruppe identifizierende Signalisierungsinformation vom ersten Netzknoten (NK2) an den weiteren Netzknoten (NK4) übermittelt wird.

10. Verfahren nach einem der vorhergehenden Ansprüche,
**dadurch gekennzeichnet,**
**daß** vom ersten Netzknoten (NK2) eine die Anrufübernahmegruppe (AUN1) identifizierende Signalisierungsinformation an den weiteren Netzknoten (NK4) übermittelt wird, und
**daß** der weitere Netzknoten (NK4) daraufhin die an ihm angekoppelten Endgeräte (E7) dieser Anrufübernahmegruppe (AUN1) durch Zugriff auf eine Zuordnungstabelle (ZT4) ermittelt, in der einer Anrufübernahmegruppe die zu dieser Anrufübernahmegruppe gehörigen, an dem weiteren Netzknoten (NK4) angekoppelten Endgeräte zugeordnet sind.

## Revendications

1. Procédé pour établir des groupes de transfert d'appels dans un réseau de communication qui contient plusieurs noeuds de réseau, dans lequel
a) après l'entrée d'un appel qui est envoyé à un terminal appelé (EZ) raccordé à un premier noeud (NK2) du réseau, un autre noeud (NK4) du réseau auquel au moins un terminal (E7) associé dans le cadre d'un groupe de transfert d'appels (AUG1) couplé au terminal appelé (E7), est déterminé
l'autre noeud (NK4) du réseau étant déterminé en fonction de la caractéristique du terminal appelé, par consultation d'un tableau d'association (ZT2) contenu dans le premier noeud (NK2) du réseau et dans lequel le groupe de transfert d'appels (AUG1) est associé à la caractéristique du terminal appelé (EZ), l'autre noeud (NK4) du réseau étant associé à ce groupe de transfert d'appels, et
b) l'information de signalisation qui permet d'identifier les terminaux (E7) du groupe de transfert d'appels (AUG1) qui sont associés à l'autre noeud (NK4) du réseau est transmise par le premier noeud (NK2) du réseau à l'autre noeud (NK4) du réseau et
c) ensuite, l'autre noeud (NK4) du réseau lance l'affichage sur les terminaux (E7) du groupe de transfert d'appels (AUG1) qui lui sont raccordés une information qui indique la possibilité de répondre à l'appel et
d) la réponse à l'appel sur un terminal (E7) du groupe de transfert d'appels (AUG1) qui est associé à l'autre noeud (NK4) du réseau est signalée au premier noeud du réseau par cet autre noeud du réseau et
e) l'appel reçu sur le premier noeud (NK2) du réseau est ensuite transféré à ce terminal (E7).

2. Procédé selon la revendication 1, **caractérisé en ce que** la transmission des informations de signalisation s'effectue par une liaison établie dans ce but entre le premier noeud (NK2) du réseau et l'autre noeud (NK4) du réseau.

3. Procédé selon la revendication 2, **caractérisé en ce que** l'établissement de la liaison est déclenché par l'entrée de l'appel.

4. Procédé selon les revendications 2 ou 3, **caractérisé en ce que** la réponse à l'appel est signalée au premier noeud (NK2) du réseau par la liaison qui a été établie.

5. Procédé selon l'une des revendications 2 à 4, **caractérisé en ce que** la liaison établie est coupée après qu'un laps de temps prédéterminé s'est écoulé depuis la réponse à l'appel.

6. Procédé selon l'une des revendications précédentes, **caractérisé en ce que** lors de la réception de l'appel sur un premier terminal (E7) du groupe de transfert d'appel (AUG1), une signalisation s'effectue entre les noeuds du réseau pour le débranchement de l'affichage des informations d'indication sur les terminaux (E2, E3, E4, E6, EZ, E7) du groupe de transfert d'appels (AUG1).

7. Procédé selon l'une des revendications précédentes, **caractérisé en ce que** des informations spécifiques à l'appel sont également transmises avec les informations de signalisation à l'autre noeud (NK4) du réseau, pour affichage sur un terminal (E7) du groupe de transfert d'appels (AUG1) qui est raccordé à ce noeud du réseau.

8. Procédé selon l'une des revendications précédentes, **caractérisé en ce que** l'autre noeud (NK4) du réseau est déterminé par un tableau (ZT2) d'association des noeuds du réseau conservés en mémoire dans le premier noeud (NK2) du réseau et dans lequel d'autres noeuds (NK1, NK4) du réseau sont associés à un terminal (EZ) raccordé au premier noeud (NK2) du réseau auquel au moins un terminal qui appartient au groupe de transfert d'appels (AUN1) de ce terminal (EZ) est accouplé.

9. Procédé selon l'une des revendications précédentes, **caractérisé en ce qu'**un terminal du groupe de transfert d'appels (AUN1) sur lequel les informations doivent être affichées, est déterminé par accès à un tableau d'association des terminaux conservé dans le premier noeud (NK2) du réseau et dans lequel l'autre terminal qui appartient à ce groupe de transfert d'appels est associé au terminal raccordé au premier noeud (NK2) du réseau et **en ce qu'**une information de signalisation qui identifie le terminal défini du groupe de transfert d'appels est transmise par le premier noeud (NK2) du réseau à l'autre noeud (NK4) du réseau.

10. Procédé selon l'une des revendications précédentes, **caractérisé en ce que** le premier noeud (NK2) du réseau transmet à l'autre noeud (NK4) du réseau une information de signalisation qui identifie le groupe de transfert d'appels (AUN1), et **en ce que** l'autre noeud (NK4) du réseau définit ensuite les terminaux (E7) qui lui sont raccordés et qui appartiennent à ce groupe de transfert d'appels (AUN1), par accès à un tableau d'association (ZT4) dans lequel les terminaux raccordés à l'autre noeud (NK4) du réseau et qui appartiennent à ce court transfert d'appels sont associés à un groupe de transfert d'appels.

## Claims

1. Method for implementing call acceptance groups in a communications network having a plurality of network nodes, in which
a) after the arrival of a call which is directed to a called terminal (EZ) which is coupled to a first network node (NK2) another network node (NK4) is determined, to which at least one terminal (E7) which is assigned to the called terminal (EZ) as a call acceptance group (AUG1) is coupled, and the other network node (NK4) being determined in accordance with the identifier of the called terminal by searching through an assignment (ZT2) which is contained in the first network node (NK2) and in which the identifier of the called terminal (EZ) is assigned the call acceptance group (AUG1) and the latter is assigned the further network node (NK4),
b) the first network node (NK2) transfers to the other network node (NK4) a signalling information item for identifying terminals (E7) of the call acceptance group (AUG1), said terminals (E7) being coupled to the other network node (NK4), and
c) the other network node (NK4) subsequently causes an indicator information item which refers to the possibility of the call being accepted being displayed at the terminals (E7) of the call acceptance group (AUG1) which are coupled to said network node (NK4), and
d) an acceptance of the call at a terminal (E7) of the call acceptance group (AUG1) which is coupled to the other network node (NK4) is signalled to the first network node via the other network node, and
e) the call which is held at the first network node (NK2) is subsequently connected through to said terminal (EZ).

2. Method according to Claim 1, **characterized in that** the transfer of the signalling information takes place via a connection which is set up for this purpose between the first network node (NK2) and the other network node (NK4).

3. Method according to Claim 2, **characterized in that** the setup of the connection is initiated by the incoming call.

4. Method according to Claim 2 or 3, **characterized in that** the acceptance of the call is signalled to the first network node (NK2) via the connection which has been set up.

5. Method according to one of Claims 2 to 4, **characterized in that** the connection which has been set up is released after a predefinable time period has expired since the acceptance of the call.

6. Method according to one of the preceding claims, **characterized in that** when the call is accepted at a terminal (E7) of the call acceptance group (AUG1), signalling between network nodes takes place in order to switch off the display of the indicator information item at the terminals (E2, E3, E4, E6, EZ, E7) of the call acceptance group (AUG1).

7. Method according to one of the preceding claims, **characterized in that** together with the signalling information call-specific information is also transferred to the other network node (NK4) to be displayed at a terminal (E7), of the call transfer group (AUG1), which is coupled to this network node.

8. Method according to one of the preceding claims, **characterized in that** the further network node (NK4) is determined by accessing a network node assignment table (ZT2) which is stored in the first network node (NK2) and in which other network nodes (NK1, NK4) are assigned to a terminal (EZ) which is coupled to the first network node (NK2), at least one terminal which belongs to the call acceptance group (AUN1) of this terminal (EZ) being coupled to said other network nodes (NK1, NK4).

9. Method according to one of the preceding claims, **characterized in that** a terminal of the call acceptance group (AUN1) at which the indicator information is to be displayed is determined by accessing a terminal assignment table in the first network node (NK2), in which terminal assignment table a terminal which is coupled to the first network node (NK2) is assigned another terminal which belongs to its call acceptance group, and **in that** a signalling information item which identifies the terminal, of the call acceptance group, which has been determined is transferred from the first network node (NK2) to the other network node (NK4).

10. Method according to one of the preceding claims, **characterized in that** a signalling information item which identifies the call acceptance group (AUN1) is transferred from the first network node (NK2) to the other network node (NK4), and **in that** the other network node (NK4) subsequently determines the terminals (E7) of this call acceptance group (AUN1) which are coupled to it by accessing an assignment table (ZT4) in which a call acceptance group is assigned the terminals which belong to this call acceptance group and which are coupled to the other network node (NK4).
